Europäisches Patentamt

European Patent Office

Office européen des brevets

(11) Numéro de publication: **0 168 297**
**A1**

(12) # DEMANDE DE BREVET EUROPEEN

(21) Numéro de dépôt: **85401165.7**

(22) Date de dépôt: **13.06.85**

(51) Int. Cl.⁴: **E 02 B 17/02**

(30) Priorité: **14.06.84 FR 8409344**

(43) Date de publication de la demande:
**15.01.86 Bulletin 86/3**

(84) Etats contractants désignés:
**DE GB IT NL**

(71) Demandeur: **Dziewolski, Richard**
**8 bis rue Jules Ferry**
**F-92100 Boulogne(FR)**

(72) Inventeur: **Dziewolski, Richard**
**8 bis rue Jules Ferry**
**F-92100 Boulogne(FR)**

(74) Mandataire: **Hasenrader, Hubert et al,**
**Cabinet BEAU DE LOMENIE 55, rue d'Amsterdam**
**F-75008 Paris(FR)**

(54) **Plate-forme marine, notamment destinée à former une base de loisirs.**

(57) Cette plate-forme destinée à former une île artificielle comprend une base de flotteurs immergée (1), des piliers verticaux (2-6), et une structure émergée portée par les piliers ; la base de flotteurs (1) est formée d'un disque à caissons sur lequel sont encastrés les piliers verticaux (2-6) formant les génératrices d'un cylindre à base sensiblement circulaire et la structure comporte d'une part une partie inférieure (9) en forme de disque tranversée par les piliers (2-6), et une partie supérieure (10) constituée par des modules assemblables cylindriquement à partir des piliers.

Cette structure permet de dimensionner le disque de flotteurs (1), en fonction de la plate-forme et de caractéristiques marines de manière à offrir un faible tirant d'eau et une grande stabilité permettant la construction complète de la plate-forme dans un chantier naval puis son remorquage vers le site d'implantation.

./...

Fig.1

# 0168297

Plate-forme marine, notamment destinée à former une base de loisirs.

L'invention concerne une plate-forme destinée à former une île artificielle servant, dans une application préférée, de base de loisirs implantée en site marin ou assimilé (lac, marécages, etc.).

On connaît déjà des plate-formes, généralement des plate-formes d'exploitation pétrolière, comportant une base de flotteurs immergée, des piliers verticaux et une structure émergée portée par les piliers. On sait qu'il est possible (cf. par exemple le document FR-A-2282021) de construire des plate-formes en chantier naval, puis de les remorquer sur le site d'implantation où elles sont posées par remplissage progressif des ballasts. Mais jusqu'ici, on ne construit en chantier naval (ou en yard) que la partie inférieure de la plate-forme : la partie supérieure de la plate-forme renfermant les équipements est installée sur le site, d'où le coût élevé de la construction et de l'installation.

Par ailleurs, les plate-formes connues jusqu'à présent ont essentiellement une vocation technique. Or il apparaît que, dans le domaine de la construction immobilière, les terrains de construction en bordure de littoral deviennent de plus en plus rares et de plus en plus chers dans certains pays industrialisés.

Dans les sites touristiques privilégiés, en bordure de mer, les constructions fixes ou étalées sur plusieurs kilomètres nécessitent la suppression des espaces verts et contribuent à la pollution des rivages.

Le but de l'invention est de proposer une nouvelle structure de plate-forme comportant un ensemble immobilier autonome et pouvant être intégralement construite et équipée en chantier naval.

Ce but est atteint conformément à l'invention grâce à une structure remarquable en ce que la base de flotteurs est formée d'un disque à caissons sur lequel sont encastrés les piliers verticaux formant les génératrices d'un cylindre à base sensiblement circulaire et en ce que la structure émergée comporte d'une part une partie inférieure en forme de disque traversée par les piliers, et une partie supérieure constituée par des modules assemblables cylindriquement à partir des piliers.

Avantageusement, le disque de flotteurs et le disque émergé ont sensiblement la même extension.

Avantageusement, le disque de flotteurs et/ou le disque émergé ont un contour sensiblement circulaire.

Avantageusement, les piliers renferment les circulations verticales.

Avantageusement, le disque de flotteurs renferme les équipements lourds.

Avantageusement, le disque de flotteurs, est dimensionné en fonction de la plate-forme et des caractéristiques marines de manière à offrir un faible tirant d'eau et une grande stabilité permettant la construction complète de la plate-forme dans un chantier naval puis son remorquage vers le site d'implantation.

Avantageusement, la plate-forme comporte en plus des piliers répartis cylindriquement un mât central pouvant servir de support de grue notamment pour la construction de la partie cylindrique modulaire de la structure émergée.

La plate-forme est essentiellement destinée aux ensembles immobiliers de loisirs construits à proximité des côtes. Elle comprend tous les équipements lui assurant une autonomie complète : habitations, bureaux, loisirs, commerces, locaux techniques, stockage et production de l'énergie ; stockage et fabrication de l'eau douce, etc.

L'invention sera mieux comprise grâce à la description suivante d'un mode préféré de réalisation. Il sera fait référence aux dessins annexés sur lesquels :

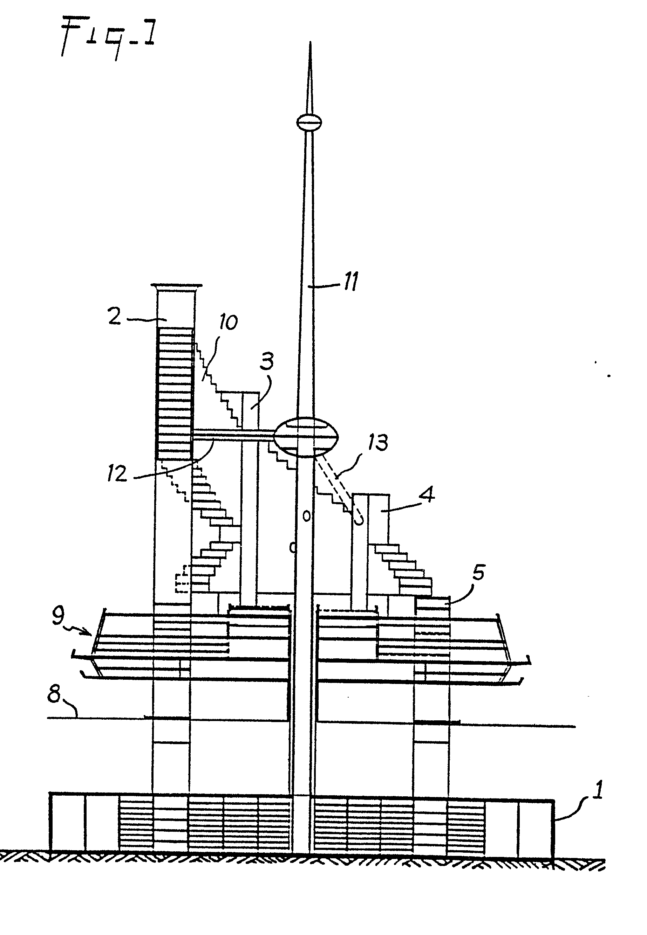

    - la figure 1 est une vue latérale en coupe de la plate-forme conforme à l'invention.

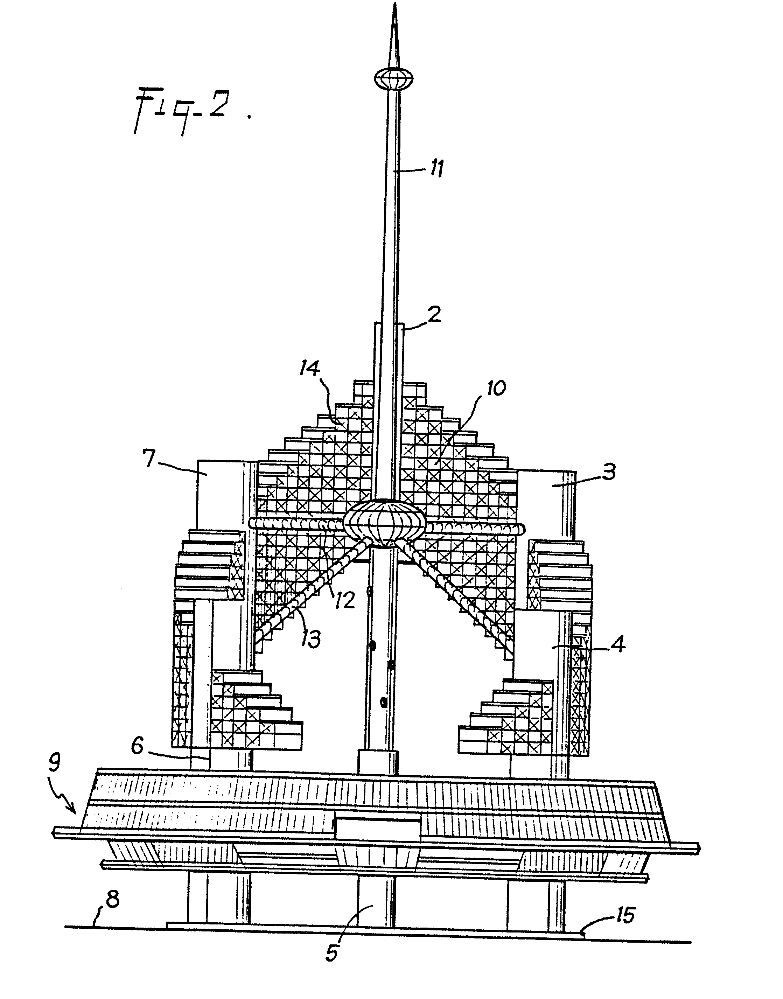

    - la figure 2 est une vue de la face de la structure émergée de la plate-forme de la figure 1.

La plate-forme comprend un disque circulaire 1 de flotteurs dans lequel sont ancrés six piliers 2 à 7 régulièrement répartis sur un cercle.

Les piliers émergent de l'eau, dont le niveau moyen est représenté en 8, et supportent, en le traversant, le disque émergé 9.

La partie supérieure des piliers, dont la longueur peut être inégale en fonction d'un parti architectural et/ou pour tenir compte de certains facteurs tels que l'ensoleillement, le vent, etc., sert d'accrochage à la structure modulaire cylindrique 10.

Un mât 11 est prévu au centre de la structure.

Les dimensions du disque de flotteurs 1, réalisé en caissons de béton armé, sont calculées pour permettre et la construction complète en chantier naval (donc faible tirant d'eau, inférieur à une quinzaine de mètres), et le remorquage vers le site dans des conditions satisfaisantes de sécurité. Dans un exemple particulier de réalisation, on a calculé que le disque aurait un diamètre d'environ 250m et une épaisseur de 30m (la hauteur de la pile 2 faisant dans cet exemple 270m).

Le flotteur 1 renferme l'ensemble des équipements techniques indispensables pour assurer l'autonomie de la plate-forme: locaux techniques, ballasts d'eau de mer, réservoir de stockage des hydrocarbures, production et stockage de l'eau douce, traitement des ordures ménagères, traitement des eaux usées et des eaux vannes, production d'électricité, magasins, dépôts, parkings pour voitures (dans l'hypothèse où la plate-forme est reliée avec la côte par un tunnel permettant l'accès des voitures). Le flotteur 1 peut également comporter des abris anti-atomiques pour l'ensemble du personnel vivant sur la plate-forme en offrant une excellente protection contre les radiations (eau + béton).

La forme de disque circulaire donnée au flotteur est avantageuse en ce qu'elle offre un volume maximum pour un minimum de surface développée (et donc un minimum de prise aux efforts dûs aux courants marins).

L'installation des équipements dans le flotteur, déjà lourd du fait de sa réalisation en béton, contribue à abaisser le centre de gravité de la plate-forme et donc à augmenter sa stabilité (d'où la possibilité de remorquage et de construction en chantier naval).

Le nombre et la répartition des piliers tiennent compte des dimensions de la plate-forme et de la distribution des efforts dans le disque du flotteur 1 et dans le disque émergé 9, ainsi que d'autres paramètres relevant de l'esthétique architecturale ou de prescriptions réglementaires telles que les distances maximales jusqu'aux issues de secours logées dans les piliers, etc.

Les piliers 2 à 7 sont de préférence réalisés en modules tubulaires d'acier, ce qui permet de les assembler au sol horizontalement puis de les lever pour les ancrer sans le disque de flotteurs 1. Les piliers sont avantageusement de section rectangulaires pour permettre une utilisation rationnelle de leur volume intérieur logeant les circulations verticales (ascenseurs, etc.).

Le mât central 11 est également construit à partir d'éléments tubulaires assemblés. Sa tenue malgré sa grande hauteur, est assurée par un haubanage et/ou des contreventements abritant des circulations horizontales 12 (piétonnes) et obliques 13 (mécaniques) reliant les piles au mât.

En phase provisoire, le mât sert de support à la flèche de grue autogrimpante utilisée pour le levage et le montage des modules des piles 2 à 7, des modules du disque émergé 9 et de ceux de la structure cylindrique 10.

Le mât 11 peut servir de phare, d'antenne d'émetteur-récepteur, et abriter des équipements divers tels que restaurant panoramique, ascenseurs extérieurs et intérieurs, etc.

Le disque émergé 9, avantageusement conçu comme un assemblage de modules, permet de disposer d'un grand volume intérieur pour une faible hauteur et surface extérieure : il permet donc de loger un grand nombre d'équipements en partie basse de la structure émergée et contribue lui aussi de ce fait à abaisser le centre de gravité de l'ensemble. De plus, en reliant les piliers entre eux, il participe de façon essentielle à la

5

0168297

rigidité de la structure complète, au travers des planchers de ses différents niveaux (par exemple quatre niveaux). Le disque émergé 9 s'appuie également sur le mât central 11 de manière à réduire la partie des planchers entre appuis.

Le disque émergé 9 renferme l'ensemble des équipements commerciaux et de loisirs indispensables pour assurer l'autonomie de la plate-forme ; centre commerciaux, salons, locaux administratifs, salles de spectacle, salles de réunions et de congrès, casinos, restaurants, salles de sports polyvalentes, piscines, patinoires, tennis, squash, etc.

La partie supérieure 10 de la structure immergée est avantageusement conçue sous forme d'arcs hélicoïdaux modulaires reliés entre eux par des diagonales extérieures 14 : cet ensemble présente une rigidité exceptionnelle : son comportement vis-à-vis des sollicitations dynamiques horizontales du vent est celui d'une structure spatiale cylindrique dont tous les éléments participent à la résistance, ce qui contribue donc à alléger, pour une résistance et un volume logeable donnés, le poids de la structure supérieure, et par conséquent accroît la stabilité de la plate-forme.Le décalage des différents étages de modules assure un ensoleillement excellent. Cette partie est essentiellement destinée aux habitations, hotels et bureaux.

L'ensemble peut être complété par des pontons flottants 15 pouvant servir à constituer un port de plaisance, et/ou être relié à la terre par un ouvrage d'art aérien.

La partie sous-marine peut être équipée d'un espace d'observation de la faune et de la flore sous-marine.

La distance entre les flotteurs 1 et le disque 9 dépend de différents paramètres : profondeur d'eau, hauteur de la houle et des marées, stabilité en phase de remorquage et d'exploitation.

Lorsque la profondeur d'eau est trop importante (par exemple supérieure à 100m) pour permettre aux flotteurs de reposer sur le fond marin, on peut utiliser un dispositif d'ancrage au moyen de câbles tendus, tel que décrit dans le brevet français n°2408511.

0168297

REVENDICATIONS

1.      Plate-forme destinée à former une île artificielle, du type comprenant une base de flotteurs immergée (1), des piliers verticaux (2-6), et une structure émergée portée par les piliers, caractérisée en ce que la base de flotteurs (1) est formée d'un disque à caissons sur lequel sont encastrés les piliers verticaux (2-6) formant les génératrices d'un cylindre à base sensiblement circulaire et en ce que la structure comporte d'une part une partie inférieure (9) en forme de disque traversée par les piliers (2-6), et une partie supérieure (10) constituée par des modules assemblables cylindriquement à partir des piliers.

2.      Plate-forme selon la revendication 1, caractérisée en ce que le disque de flotteurs (1) et le disque émergé (9) ont sensiblement la même extension.

3.      Plate-forme selon l'une quelconque des revendications 1 ou 2, caractérisée en ce que le disque de flotteurs (1) et/ou le disque émergé (9) ont un contour sensiblement circulaire.

4.      Plate-forme selon l'une quelconque des revendications 1 à 3, caractérisée en ce que les piliers (2-6) renferment les circulations verticales.

5.      Plate-forme selon l'une quelconque des revendications 1 à 4, caractérisée en ce que le disque de flotteurs (1) renferme les équipements lourds.

6.      Plate-forme selon l'une quelconque des revendications 1 à 5, caractérisée en ce que le disque de flotteurs (1), est dimensionné en fonction de la plate-forme et des caractéristiques marines de manière à offrir un faible tirant d'eau et une grande stabilité permettant la construction complète de la plate-forme dans un chantier naval puis son remorquage vers le site d'implantation.

7.      Plate-forme selon l'une quelconque des revendications 1 à 6, caractérisée en ce qu'elle comporte en plus des piliers (2-6) répartis cylindriquement un mât central (11) pouvant servir de support de grue notamment pour la construction de la partie cylindrique modulaire de la structure émergée.

Fig.1

Fig. 2.

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl 4) |
|---|---|---|---|
| A | DE-A-2 457 536  (HOLZMANN) <br> * Pages 7-10; figures 1-5 * <br> --- | 1,2,6 | E 02 B   17/02 |
| A | US-A-3 738 113  (MADARY) <br> * Figure 1 * <br> --- | 3 | |
| A | DE-A-2 922 715  (ANKER) <br> * Figure 1 * <br> --- | 7 | |
| A | FR-A-2 337 793  (SEA TANK) <br> * En entier * <br> --- | 1,2 | |
| A,D | FR-A-2 282 021  (STRABAG BAU) <br> * En entier * <br> ----- | 1,2 | |

**DOMAINES TECHNIQUES RECHERCHES (Int. Cl.4)**

E 02 B

Le présent rapport de recherche a été établi pour toutes les revendications

| Lieu de la recherche | Date d'achèvement de la recherche | Examinateur |
|---|---|---|
| LA HAYE | 26-09-1985 | HANNAART J.P. |